# EUROPEAN PATENT SPECIFICATION

(11) **EP 3 108 781 B1**
(45) Date of publication and mention of the grant of the patent: **31.10.2018**
(21) Application number: 16275088.9
(22) Date of filing: 23.06.2016
(51) Int. Cl.: A47J 43/044, A47J 43/07

(54) **STAND MIXERS**
STANDMIXER
MÉLANGEURS DE SOCLE

(30) Priority: 26.06.2015 GB 201511271
(43) Date of publication of application: 28.12.2016
(73) Proprietor: Kenwood Limited, Havant Hampshire PO9 2NH (GB)
(72) Inventor: FIELDS, Robert, Havant Hampshire PO9 2NH (GB)
(74) Representative: Hector, Annabel Mary

(56) References cited:
- WO-A1-2005/002407
- GB-A- 2 516 892
- US-A- 2 599 275
- US-A- 6 068 397

## Description

This invention relates to stand mixers, by which is meant the kind of motor-driven kitchen machine which is used to mix, or otherwise process, ingredients in a bowl by powered movement of one or more shanked tools which depend into the bowl from a head unit that carries a downwardly-facing drive outlet, powered by the motor, to which the shank, or shanks, of the tool, or tools are fitted.

Such mixers conventionally comprise a generally C-shaped casing which provides a pedestal-like support for a mixing bowl and a generally upright support portion supporting the head unit so that it extends, for operation, overhead of the bowl. Moreover, the powered movement of the shanked tool or tools is conventionally planetary in nature.

Stand mixers such as the Kenwood Chef kitchen machine are well known and have been well established in use for many years. Over the years, mixers of this kind have been adapted and developed so as to perform an ever broadening range of functions, and many such appliances provide, for example, a plurality of drive outlets running at different speeds and with differing torque characteristics, thus enabling them to perform a wide spread of operations.

Recently, stand mixer arrangements with a still broader operational capability have been developed to incorporate heating means, enabling ingredients in the bowl to be heated whilst being subjected to the planetary mixing action. The degree of heating is selectable, allowing the ingredients to be completely cooked, partially cooked, or merely warmed, according to user requirements and/or the procedures dictated by individual recipes.
Whilst conventional stand mixers have proved to be extremely valuable pieces of kitchen equipment, adherence to the structures and configurations typically used imposes limitations on the size and shape of such appliances. The dimensions of kitchen appliances are important, both because of the footprint they require on a work surface during operation, and because they need to be stored when not in use. Storage space for appliances is at a premium in most kitchens, particularly with the current trend towards smaller properties that are easier and cheaper to maintain and run. Such properties tend to have compact kitchens in which the storage of major kitchen appliances can present difficulties.
The present invention aims to address such difficulties by providing stand mixers having compact dimensions, whilst still offering a good range of operational capabilities.
GB2516892 discloses a stand mixer having a base formed with a receptable for accomodating the stand and arm for storage. US6068397 shows a food mixer having an arm pivotally attached to the base for receiving a head assembly, which can be collapsed into the plane of the base.

US6068397A also discloses a stand mixer. According to the invention there is provided a stand mixer comprising a supporting foot member intended to stand on a work surface and configured to support a bowl for ingredients to be processed by the mixer; a head unit capable of supporting one or more detachable tools suspended therefrom; support means for supporting said head unit above said foot member for operation of the mixer, and means including an electric motor and associated transmission means for imparting rotary motion to said one or more tools when suspended from the head unit, characterised in that the foot member is articulated to permit a part at least thereof to be folded towards the head unit when the mixer is not in use, thereby creating a folded structure dimensioned to fit within the bowl for storage.

Preferably, the support means comprises an upright component linking the foot member and the head unit, such that the head unit is disposed above the foot member for operation of the mixer.

In preferred embodiments of the invention, the electric motor of the stand mixer is provided in said support means, though it may alternatively be provided in the head unit.

In particularly preferred embodiments, the head unit, support means and foot member form respective limbs of a generally C-shaped operational structure and the articulation of the foot member permits part at least of said member to be folded towards the head unit, thereby forming part at least of a fourth limb across the open ends of the C-shaped operational structure to create a compact storage structure.

In some preferred embodiments of the invention, the support means comprises one or more telescopic members whereby the head unit can be raised relative to the foot member to allow for the attachment and removal of said at least one tool to and from the head unit, and/or to allow the bowl to be placed on the foot member and under the head unit for operation. In such embodiments, it is preferred that the motor is carried by the support means and the head unit picks up drive for the at least one tool from a drive outlet on the support unit via a connection that can be readily made and broken by the telescopic movement.

In some preferred embodiments of the invention, the bowl is rotatable, and the foot member may conveniently provide a spigot on which the bowl can be mounted for rotation. The bowl may be provided with means at or near its rim for picking up drive from the motor via a gearing system. Moreover, the bowl may be tilted for operation, such that its axis of rotation is non-vertical.
The tool or tools are preferably driven in simple rotation. Thus the head unit may be of a relatively small dimension, facilitating storage.

In order that the invention may be clearly understood and readily carried into effect, one embodiment thereof will now be described, by way of example only, with reference to the accompanying drawings, of which:

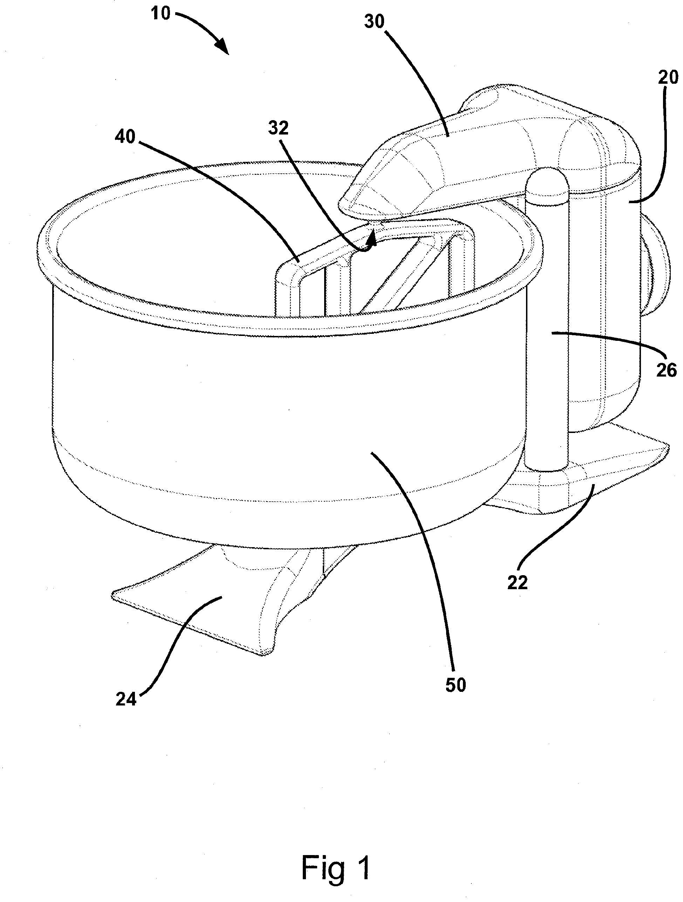

Figure 1 shows, in perspective view, a stand mixer in accordance with one embodiment of the invention;

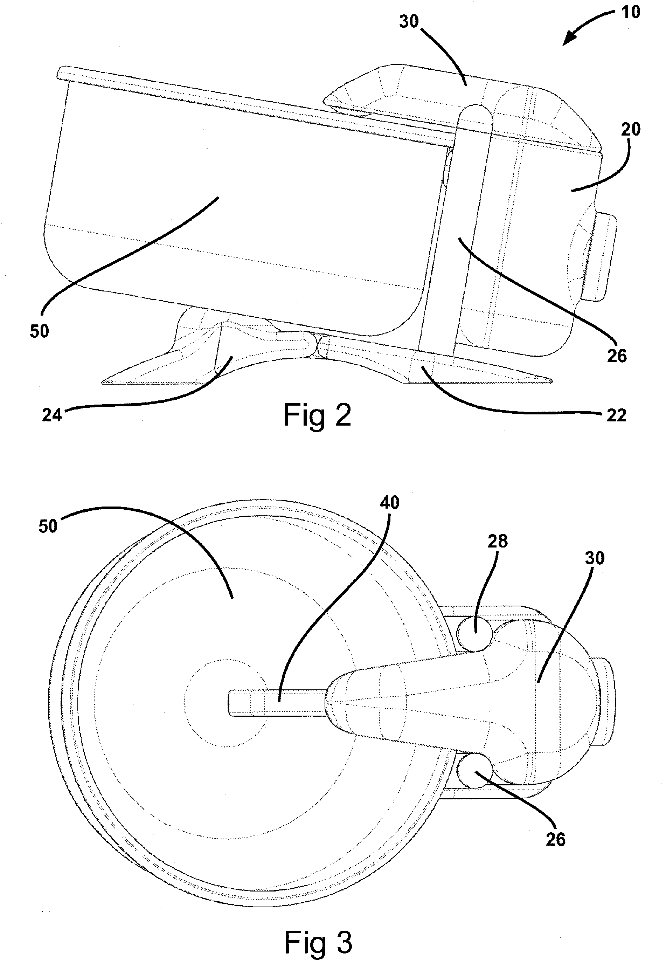

Figure 2 shows a side elevation of the mixer;
Figure 3 shows a plan view of the mixer;

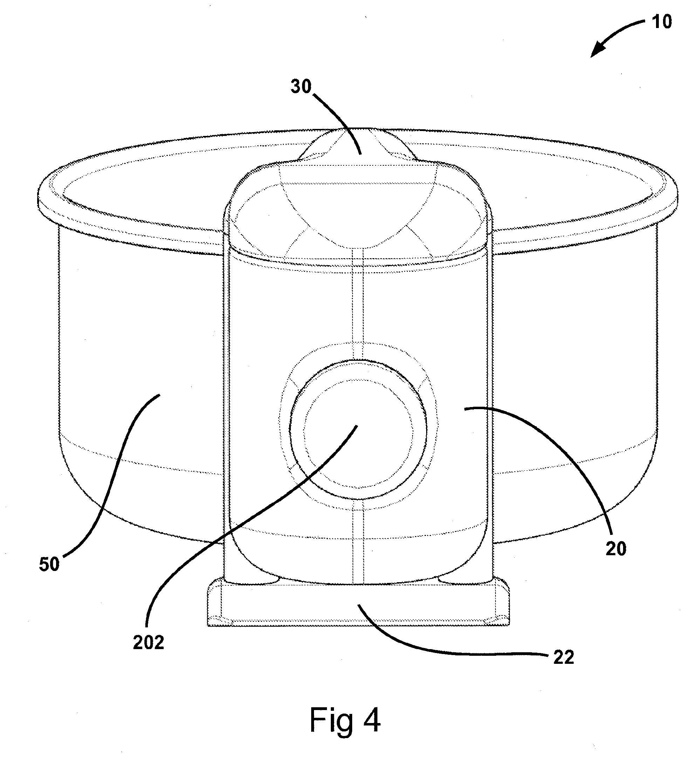

Figure 4 shows a rear elevation of the mixer;
Figure 5 shows a view similar to that of Figure 1, but with the head unit raised to enable the bowl to be placed into/removed from the mixer and/or to enable tools to be changed;
Figure 6 shows a view similar to that of Figure 2, but with the head unit in its raised position;
Figure 7 shows a view similar to that of Figure 4, but with the head unit in its raised position;
Figure 8 shows the mixer in cross-section taken through the centre of the appliance with the head unit in its lower (operational) position, and seen from the side shown in Figure 2; and
Figure 9 shows how the mixer can be folded into a compact form and accommodated in the mixing bowl.

Referring now to the drawings, there is shown one embodiment of a food mixer 10 that, due to its intrinsic geometry, allows the main body components to be folded or otherwise collapsed in a simple way and stored inside the mixing bowl.

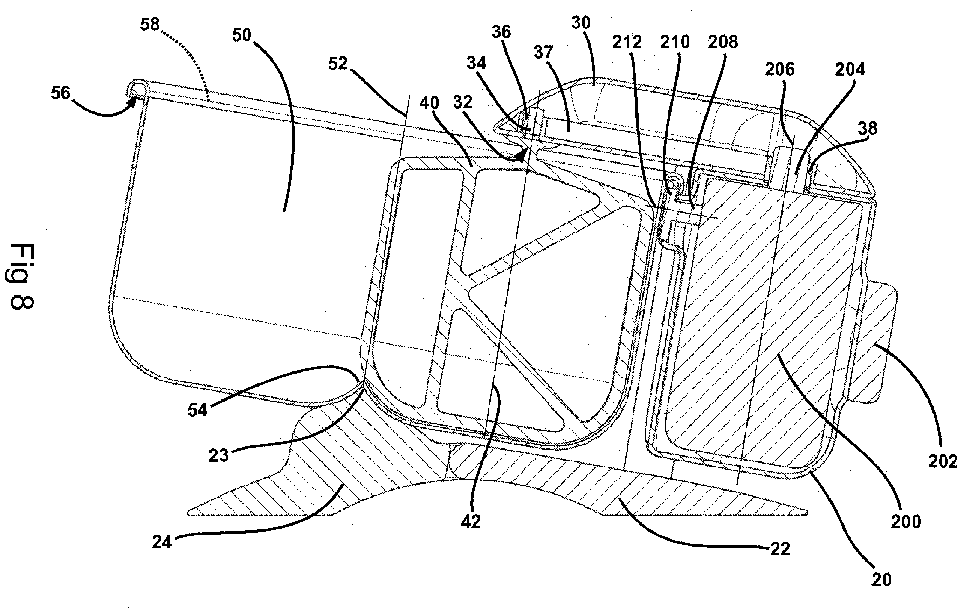

The main body components include a support member 20 which, in this example, houses an electric motor and gearbox unit, shown at 200 in Figure 8, and is provided with a stand or base 22. The support member is disposed upright for operation of the mixer 10, and supports a head unit 30 that is provided with a rotary drive outlet 32 to which a mixing or beating tool 40 can be releasably attached. The base 22 is also coupled to a foot member 24 which, when the mixer is configured for operation, extends outwardly from the base 22 and beneath the head unit 30, providing stability for the mixer and support for a bowl 50 positioned such that the tool 40 depends into it and can be rotated therein by means of the electric motor and the aforementioned drive outlet 32 on the head unit 30.

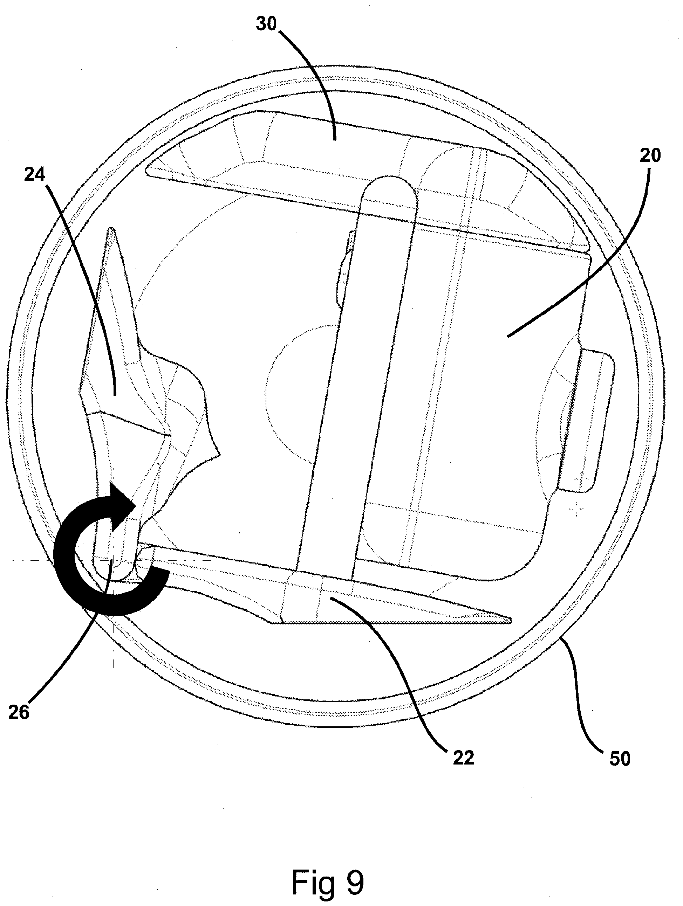

For storage of the mixer, once the bowl 50 has been removed from the base, the foot member 24 is articulated, and can pivot about an axis 26 as shown in Figure 9 to adopt a position opposite the support member 30. By this means, if the head unit 30, the support member 20 and the base 22 and the foot member 24 are regarded as forming a generally C-shaped arrangement in an operational condition of the mixer, the pivoting motion of the foot member 24 about the axis 26 brings the member 24 into the C-shape and forms at least a part closure of the open ends of the "C", thereby configuring the mixer into a compact form that can be housed for storage within the bowl 50.

The pivoting action of the foot member 24 about axis 26 may be completely free or there may be discrete locking positions for both folded (storage) and unfolded (operational) conditions of the mixer 10, and may be facilitated by means of any convenient mechanism. The movement of the foot member 24 to reduce its effective length could also be accomplished by a sliding action or with the foot 24 being completely removable from the base 22, thus requiring assembly and disassembly by the user.

Food is mixed inside the bowl 50 by a combination of the rotation of the beater 40 about its own axis 42 and the rotation of the bowl 50 itself about its own axis 52, since the beater lies to one side of the bowl. In the example shown, the axis of rotation of the beater 40 lies between the support member 20 and the bowl axis 52, approximately equidistant the support member 20 and the bowl axis 52. This arrangement allows the head unit to be of a small dimension, preferably not extending beyond the position of the bowl axis, and ideally extending only just past the tool axis 52, in order to facilitate storage.

These rotations can be linked, so that when one is turning so is the other (though at different speeds), or they can be independent, thereby providing increased control over the mixing process. The directions of rotation of the tool 40 and the bowl 50 about their respective axes 42 and 52 need not be fixed, and means can be provided to change either or both directions of rotation during mixing if required.

In the shown example the base 22 is joined to the support member 20 by two tubes 26 and 28 for a reason which will become clear later. Alternatively, however, a conventional body construction consisting of plastic mouldings or castings could be used. Associated with the motor/gearbox unit 200 housed within the support member 20 is a speed control dial 202, presented on an external surface of the member 20. The member 20 also houses an electronic speed control circuit, but this is conventional and thus not shown. The output shaft of the motor gearbox 200 is arranged to drive a main drive outlet/connector 204 situated on the principal operational axis 206 of the motor.

The motor/gearbox unit 200 also drives in rotation a bowl drive shaft 208, the rotational axis 212 of which is perpendicular to the axis 206. As mentioned previously, the rotations of the bowl drive shaft 208 and the main drive connector 204 can be linked so that when one is turning so is the other, or they can be independently controlled. Moreover, the directions of rotation about the two axes 206 and 212 need not be fixed and provision can be made for altering them during mixing if required. The rotational axes 42 and 52 of the tool 40 and the bowl 50 respectively are tilted at an angle 21 to the horizontal ensuring that any liquid or flowing solid foods are transported down toward the area swept by the beating tool 40 as it rotates about its axis 42.

The bowl 50 locates on a boss or spigot 23 that is part of the foot member 24. This boss or spigot engages into a corresponding recess 54 in the base of the bowl 50 and preferably, since the bowl is rotated on the boss or spigot 23, which acts (with the corresponding recess 54) as a bearing for the rotational movement of the bowl, one or the other or both of the components 23 and 54 is fabricated or treated (by coating, or infusion or otherwise) with a suitable medium to reduce friction. It will be appreciated that alternative means of supporting the bowl and allowing its rotation relative to the foot member could be used if preferred, and that for example a tubular insert of metal, ceramic or hard plastics material could be provided in the recess 54 if necessary to reduce wear.

In the shown example, the shape of the component 23 upstanding from the foot member 24 and the matching shape of the recess 54 in the underside of the bowl 50 are configured, in relation to the shape of the beater tool 40, so as to minimise the "dead" space inside the bowl 50 that is inaccessible to the tool 40. This arrangement, however, is not essential to the invention.

The top edge of the bowl 50 is supported by the bowl drive shaft 208. This shaft 208 is provided at its end with a component 210 of larger diameter which fits inside a rolled over edge 56 of the bowl 50. In this arrangement, as the bowl drive shaft 208 rotates, the fact that the larger diameter component 210 bears against the inside surface of the rolled over edge 56 causes the bowl 50 to rotate on its axis 52. The means of transmitting the drive from the bowl drive shaft 208 to the rolled over edge 56 of the bowl 50 can be via friction, with the bowl drive shaft 208 and/or the enlarged component 210 being of rubber or other high friction material or, as illustrated here, the bowl drive shaft 208 and/or the enlarged component 210 can have a gear form or other toothed shape that interfaces with a geared or toothed bowl gear ring 58 that is held under the rolled over edge 56. The bowl gear ring 58 can conveniently be provided as a plastic part inserted under the rolled over edge 56 during manufacture or an over moulded part. Alternatively, it will be appreciated that the bowl gear ring 58 could be integrally formed with the bowl.

The bowl 50 can, if necessary, be further supported by pads or rollers mounted elsewhere on the unit to help stabilise it, or to or prevent any unwanted movement. When the head unit 30 has been lowered, and the bowl 50 thus captured in place, it may be necessary or preferable, in some forms of construction, for part of the head unit 30 to actively push down onto the top rim of the bowl 50 to ensure that there is sufficient friction or engagement for the drive from the bowl drive shaft 208. Such downward pressure can, if provided, be implemented by any convenient means, such as a slider, roller or similar.

By driving the bowl 50 from the rolled over edge 56 and requiring only a simple boss 23 to allow the bowl 50 to rotate on its axis 52, the design of the foot 24 is very simple and it is unnecessary to provide a complex motor gearboxes to achieve the bowl rotation as with some current stand mixer designs.

It will be appreciated that the motor 200 and the beater tool 40 are connected via the head unit 30. In the present arrangement, the beater tool 40 is driven from the drive outlet 32 which, in turn, is connected to a drive shaft 34. This shaft 34 bears a pulley 36 which is aligned with another pulley 38 that is captive in the head unit 30 and is precisely aligned with the principal operational axis 206 of the motor 200. A drive belt 37 is stretched between the pulleys 36 and 38, and moreover the pulley 38, or a component supporting it, is configured to dock releasably with the main drive outlet/connector 204 on the support member 30. It will be appreciated that the driving connection between the motor 200 and the beater tool 40 could alternatively be established by means including gears, shafts, chains or any other known drive transmission methods and that, if necessary, a reduction gearbox may be provided.

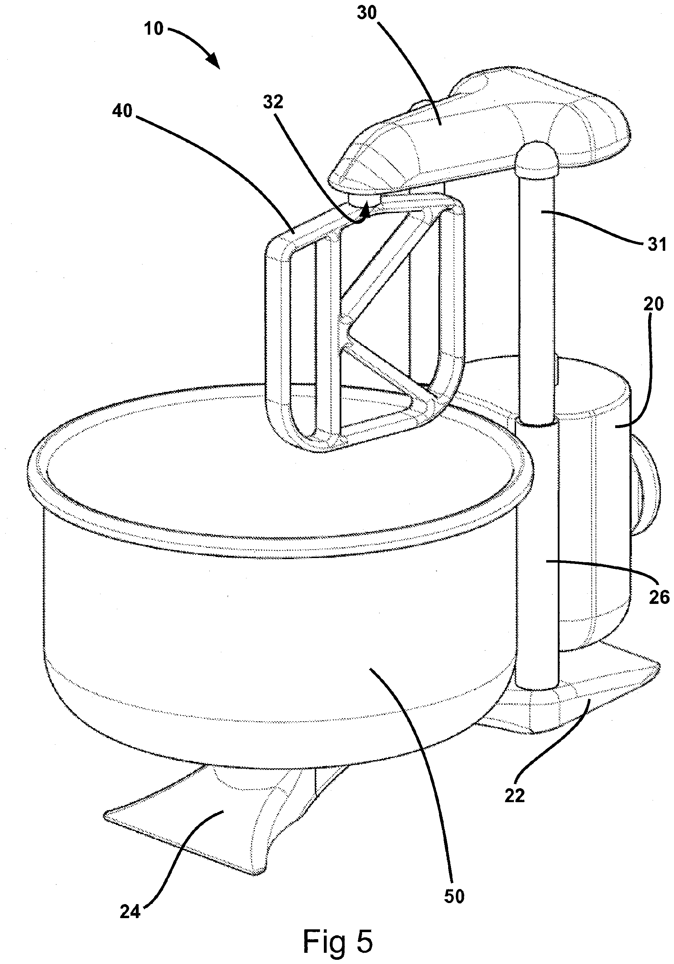

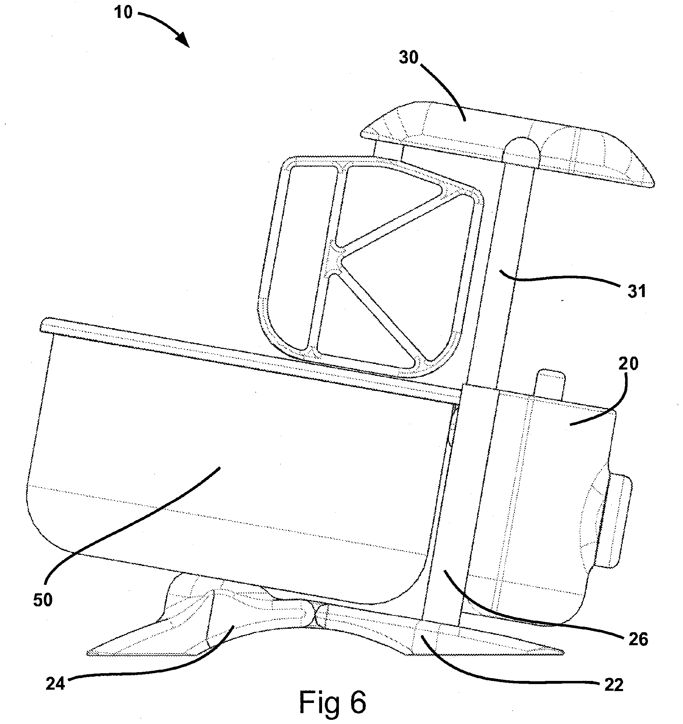

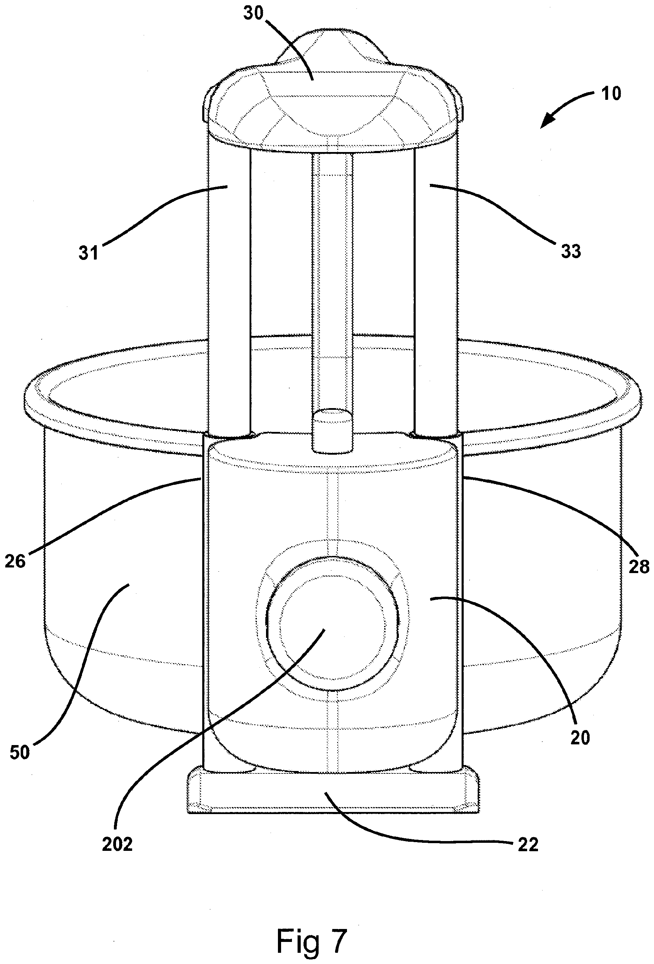

In order to allow the bowl 50 to be removed from or placed into the mixer 10, it is necessary to provide means to allow the head unit 30 either lift or tilt out of the way. Current food mixers all use a tilting action. The shown example, however, uses a lifting action (best seen in Figures 5 to 7) for this purpose; thus permitting the use of the above-described simple and readily disconnectable drive from the motor 200 to the beater tool 40.

In the present arrangement the lifting action is provided and controlled by means of the aforementioned tubes 26 and 28 which are mounted rigidly into the base 22 and to support member 20. Inside the tubes 26 and 28 are located inner sliders 31 and 33 respectively which are rigidly mounted to the head unit 30. It will be appreciated that the components 26, 31 and 28, 33 form respective elements of a dual telescopic arrangement. The inner sliders 31 and 33 allow the head unit 30 to move along the same axis as the beater 40, and are dimensioned to allow the beater 40 to completely clear the bowl 50.

In the illustrated embodiment, only the head unit 30 is lifted, leaving the motor unit 200 and the support member 20 attached to the hollow tubes 26 and 28, and therefore to the base 22. The connection between the main drive connector 204 and the pulley 38 is broken during this lifting movement, and reconnected when the head unit 30 is fully lowered again.

The main drive connector 204 can be configured in similar manner to the connector between a blender goblet and its motor unit, or between a food processer and its bowl. By leaving the motor unit 200 attached to the base 22 and support member 20, the weight can be kept low, allowing good stability.

To further increase stability, the foot 24 could have additional folding components that increase the footprint and make the unit effectively wider. This could alternatively be achieved by splitting the foot 24 into several separate components and hinging them at different angles from the base 22. In that way, when unfolded, they create a wide footprint but, when folded, they still fit within the diameter of the bowl 50 for storage. In another variation of the illustrated embodiment, the motor unit 200 could be permanently attached to the head unit 30 and therefore be lifted up when the head is lifted. Clearly, this arrangement would position the weight of the motor unit at a higher level, and therefore the appliance could be less stable in the raised position. Such an arrangement, however, would beneficially remove the need for a breakable main drive connector 204.

The movement of the head unit 30 along the two hollow tubes 26 and 28 could be controlled so that the head unit of the mixer 10 can be latched into the fully raised and fully lowered positions. Such a latching arrangement can be provided by means of a catch system, either as part of the head unit 30, of the inner sliders 31 and 33 or any other part of the design. The movement of the head unit 30 along the two hollow tubes 26 and 28 could be sprung so that, when a catch is released the head lifts or lowers automatically. This action could further be damped to control the speed of ascent or descent, and the damping, if provided, can be achieved by the use of rotary viscous dampers or similar. Moreover, the raising and lowering movements can be automated and driven by motor, spring, or other motive force, and controlled via a mechanical or electronic interface that could also be integrated into the motor control unit.

To achieve satisfactory mixing the width of the beater tool 40 must exceed half the width of the bowl 50 since, if the beater width is too small, there will be unrecoverable "dead space" where the beater cannot reach therefore leaving unmixed food.

## Claims

1. A stand mixer (10) comprising a supporting foot member (22, 24) intended to stand on a work surface and configured to support a bowl (50) for ingredients to be processed by the mixer; a head unit (30) capable of supporting one or more detachable tools (40) suspended therefrom; support means (20, 26, 28) comprising an upright component linking the foot member and the head unit for supporting said head unit above said foot member for operation of the mixer, wherein the head unit, support means and foot member form respective limbs of a generally C-shaped operational structure, and means including an electric motor and associated transmission means for imparting rotary motion to said one or more tools when suspended from the head unit, **characterised in that** the foot member is collapsible to reduce the effective length thereof when the mixer is not in use, thereby creating a compact C-shaped storage structure dimensioned to fit within the bowl for storage.

2. A stand mixer according to claim 1, wherein the electric motor is provided in said support means (20).

3. A stand mixer according to claim 1, wherein the electric motor is provided in said head unit (30).

4. A stand mixer according to any preceding claim, wherein the foot member (22, 24) is articulated to permit a part (24) at least thereof to be folded towards the head unit (30).

5. A stand mixer according to any preceding claim, wherein the articulation of the foot member (22, 24) permits part (24) at least of said member to be folded towards the head unit (30), thereby forming part at least of a fourth limb across the open ends of the C-shaped structure.

6. A stand mixer according to any preceding claim, wherein the support means comprises one or more telescopic members (26, 28) whereby the head unit (30) can be raised relative to the foot member (22, 24) to allow for the attachment and removal of said at least one tool to and from the head unit, and/or to allow the bowl (50) to be placed on the foot member and under the head unit for operation.

7. A stand mixer according to claim 6, wherein the motor is carried by the support means (20, 26, 28) and the head unit picks up drive for the at least one tool (40) from a drive outlet on the support unit via a connection that can be readily made and broken by telescopic movement of the telescopic members (26, 28).

8. A stand mixer according to any preceding claim, including drive means (32) for driving the tool or tools in simple rotation.

9. A stand mixer according to any preceding claim, wherein the drive means (32) has a rotational axis which lies between the support means (20, 26, 28) and a central axis of the bowl (50).

10. A stand mixer according to any preceding claim, wherein the bowl (50) is rotatable, and the foot member (22, 24) is configured to provide a spigot (23) on which the bowl can be mounted for rotation.

11. A stand mixer according to claim 10, wherein the bowl is provided with means (56), located at or near its rim, for picking up drive from the motor via a gearing system.

12. A stand mixer according to claim 9 or claim 10, further comprising means (23, 54) for mounting said bowl for rotation about an axis inclined to the vertical.

## Patentansprüche

1. Standmixer (10), umfassend ein Tragfußelement (22, 24), ausgelegt zum Stehen auf einer Arbeitsfläche und konfiguriert zum Tragen einer Schüssel (50) für von dem Mixer zu verarbeitende Zutaten; eine Kopfeinheit (30), die ein oder mehrere davon herabhängende abnehmbare Werkzeuge (40) tragen kann; Tragmittel (20, 26, 28), die eine aufrechte Komponente umfassen, die das Fußelement und die Kopfeinheit verbindet, zum Tragen der genannten Kopfeinheit über dem genannten Fußelement für einen Betrieb des Mixers, wobei die Kopfeinheit, das Tragelement und das Fußelement jeweilige Gliedmaßen einer allgemein C-förmigen Betriebsstruktur bilden, und Mittel mit einem Elektromotor und einem assoziierten Übertragungsmittel zum Vermitteln einer Drehbewegung auf die genannten ein oder mehreren Werkzeuge, wenn sie von der Kopfeinheit herabhängen, **dadurch gekennzeichnet, dass** das Fußelement zusammengeklappt werden kann, um seine effektive Länge zu reduzieren, wenn der Mixer nicht in Gebrauch ist, so dass eine kompakte C-förmige Verstaustruktur entsteht, die so dimensioniert ist, dass sie in der Schüssel verstaut werden kann.

2. Standmixer nach Anspruch 1, wobei der Elektromotor in dem genannten Tragmittel (20) vorgesehen ist.

3. Standmixer nach Anspruch 1, wobei der Elektromotor in der genannten Kopfeinheit (30) vorgesehen ist.

4. Standmixer nach einem vorherigen Anspruch, wobei das Fußelement (22, 24) angelenkt ist, so dass wenigstens ein Teil (24) davon in Richtung der Kopfeinheit (30) gefaltet werden kann.

5. Standmixer nach einem vorherigen Anspruch, wobei die Artikulierung des Fußelements (22, 24) es zulässt, dass wenigstens ein Teil (24) des genannten Elements in Richtung der Kopfeinheit (30) geklappt wird, so dass wenigstens ein Teil einer vierten Gliedmaße über die offenen Enden der C-förmigen Struktur gebildet wird.

6. Standmixer nach einem vorherigen Anspruch, wobei das Tragmittel ein oder mehrere teleskopische Elemente (26, 28) umfasst, so dass die Kopfeinheit (30) relativ zum Fußelement (22, 24) angehoben werden kann, um ein Anbringen und Abnehmen des genannten wenigstens einen Werkzeugs an und von der Kopfeinheit und/oder ein Platzieren der Schüssel (50) auf dem Fußelement und unter der Kopfeinheit für einen Betrieb zuzulassen.

7. Standmixer nach Anspruch 6, wobei der Motor von dem Tragmittel (20, 26, 28) getragen wird und die Kopfeinheit den Antrieb für das wenigstens eine Werkzeug (40) von einer Antriebsverbindung an der Trageinheit über eine Verbindung abnimmt, die leicht durch eine teleskopische Bewegung der teleskopischen Elemente (26, 28) hergestellt und unterbrochen werden kann.

8. Standmixer nach einem vorherigen Anspruch, mit Antriebsmitteln (32), um die ein oder mehreren Werkzeuge in eine einfache Rotation anzutreiben.

9. Standmixer nach einem vorherigen Anspruch, wobei das Antriebsmittel (32) eine Drehachse hat, die zwischen dem Tragmittel (20, 26, 28) und einer mittleren Achse der Schüssel (50) liegt.

10. Standmixer nach einem vorherigen Anspruch, wobei die Schüssel (50) drehbar ist und das Fußelement (22, 24) so konfiguriert ist, dass ein Zapfen (23) bereitgestellt wird, an dem die Schüssel zum Drehen montiert werden kann.

11. Standmixer nach Anspruch 10, wobei die Schüssel mit an oder nahe ihrem Rand befindlichen Mitteln (56) zum Abnehmen des Antriebs vom Motor über ein Getriebesystem versehen ist.

12. Standmixer nach Anspruch 9 oder Anspruch 10, das ferner Mittel (23, 54) zum Montieren der genannten Schüssel für eine Drehung um eine zur Vertikalen geneigte Achse umfasst.

## Revendications

1. Batteur sur socle (10) comprenant un élément formant pied de support (22, 24) conçu pour reposer sur un plan de travail et configuré pour supporter un bol (50) pour des ingrédients destinés à être transformés par le batteur ; une unité de tête (30) capable de supporter un ou plusieurs outils détachables (40) suspendus depuis celle-ci ; des moyens de support (20, 26, 28) comprenant un composant vertical reliant l'élément formant pied et l'unité de tête pour supporter ladite unité de tête au-dessus dudit élément formant pied pour le fonctionnement du batteur, dans lequel l'unité de tête, le moyen de support et l'élément de pied forment des membres respectifs ayant une structure fonctionnelle en forme de C de manière générale, et des moyens incluant un moteur électrique et des moyens de transmission associés pour transmettre un mouvement de rotation auxdits un ou plusieurs outils quand ils sont suspendus depuis l'unité de tête, **caractérisé en ce que** l'élément formant pied est pliant pour réduire la longueur efficace de celui-ci quand le batteur n'est pas utilisé, créant ainsi une structure de stockage compacte en forme de C dimensionnée pour être ajustée dans le bol pour le stockage.

2. Batteur à socle selon la revendication 1, dans lequel le moteur électrique est fourni dans lesdits moyens de support (20).

3. Batteur à socle selon la revendication 1, dans lequel le moteur électrique est pourvu dans ladite unité de tête (30).

4. Batteur à socle selon l'une quelconque des revendications précédentes, dans lequel l'élément formant pied (22, 24) est articulé pour permettre qu'au moins une partie (24) de celui-ci soit pliée vers l'unité de tête (30).

5. Batteur à socle selon l'une quelconque des revendications précédentes, dans lequel l'articulation de l'élément formant pied (22, 24) permet qu'au moins une partie (24) dudit élément soit pliée vers l'unité de tête (30), faisant ainsi partie d'au moins un quatrième membre entre les extrémités ouvertes de la structure en forme de C.

6. Batteur à socle selon l'une quelconque des revendications précédentes, dans lequel le moyen de support comprend un ou plusieurs éléments télescopiques (26, 28) par lesquels l'unité de tête (30) peut être relevée par rapport à l'élément formant pied (22, 24) pour permettre que l'au moins un outil soit fixé sur ladite unité de tête et retiré de celle-ci, et/ou permettre que le bol (50) soit placé sur l'élément formant pied et sous la tête d'unité pour le fonctionnement.

7. Batteur à socle selon la revendication 6, dans lequel le moteur est porté par les moyens de support (20, 26, 28) et la tête d'unité capte l'entraînement pour l'au moins un outil (40) d'une sortie d'entraînement sur l'unité de support par le biais d'une connexion qui peut être facilement réalisée et rompue par le mouvement télescopique des éléments télescopiques (26, 28).

8. Batteur à socle selon l'une quelconque des revendications précédentes, incluant un moyen d'entraînement (32) pour entraîner l'outil ou les outils dans une rotation simple.

9. Batteur à socle selon l'une quelconque des revendications précédentes, dans lequel le moyen d'entraînement (32) a un axe de rotation qui repose entre le moyen de support (20, 26, 28) et un axe central du bol (50).

10. Batteur à socle selon l'une quelconque des revendications précédentes, dans lequel le bol (50) est capable de tourner, et l'élément formant pied (22, 24) est configuré pour fournir un ergot (23) sur lequel le bol peut être monté pour la rotation.

11. Batteur à socle selon la revendication 10, dans lequel est pourvu d'un moyen (56), situé au niveau de son rebord ou à proximité de celui-ci, pour capter l'entraînement du moteur par le biais d'un système d'engrenage.

12. Batteur à socle selon la revendication 9 ou la revendication 10, comprenant en outre des moyens (23, 54) pour monter ledit bol pour la rotation autour d'un axe incliné par rapport à la verticale.
